# EUROPÄISCHE PATENTSCHRIFT

(11) **EP 1 338 447 B1**
(45) Veröffentlichungstag und Bekanntmachung des Hinweises auf die Patenterteilung: **10.10.2007**
(21) Anmeldenummer: 03001199.3
(22) Anmeldetag: 22.01.2003
(51) Int. Cl.: B60G 21/05, B60B 35/02

(54) **Verbundlenkerachse**
Twist beam axle
Essieu à traverse déformable en torsion

(30) Priorität: 20.02.2002 DE 10207151
(43) Veröffentlichungstag der Anmeldung: 27.08.2003
(73) Patentinhaber: Benteler Automobiltechnik GmbH, 33104 Paderborn (DE)
(72) Erfinder: Grundmeier, Georg, 58239 Schwerte (DE)
(74) Vertreter: Griepenstroh, Jörg

(56) Entgegenhaltungen:
- EP-A- 0 681 932
- EP-A- 0 739 763
- DE-U- 29 915 351
- GB-A- 2 124 984
- PATENT ABSTRACTS OF JAPAN Bd. 0184, Nr. 53 (M-1662), 24. August 1994 (1994-08-24) & JP 6 143953 A (TOYOTA MOTOR CORP), 24. Mai 1994 (1994-05-24)
- PATENT ABSTRACTS OF JAPAN Bd. 2000, Nr. 21, 3. August 2001 (2001-08-03) & JP 2001 113925 A (HONDA MOTOR CO LTD), 24. April 2001 (2001-04-24)
- PATENT ABSTRACTS OF JAPAN Bd. 1999, Nr. 12, 29. Oktober 1999 (1999-10-29) & JP 11 180124 A (DAIHATSU MOTOR CO LTD), 6. Juli 1999 (1999-07-06)
- PATENT ABSTRACTS OF JAPAN Bd. 1997, Nr. 12, 25. Dezember 1997 (1997-12-25) & JP 9 216507 A (DAIHATSU MOTOR CO LTD), 19. August 1997 (1997-08-19)
- PATENT ABSTRACTS OF JAPAN Bd. 1999, Nr. 12, 29. Oktober 1999 (1999-10-29) & JP 11 180123 A (DAIHATSU MOTOR CO LTD), 6. Juli 1999 (1999-07-06)

## Beschreibung

Die Erfindung betrifft eine Verbundlenkerachse mit zwei aus je einer Unterschale und einer Oberschale zusammengesetzten Längslenkern sowie mit einem die Längslenker verbindenden Querträger.

Durch die DE 199 33 108 A1 zählt eine Verbundlenkerachse mit rohrförmigen Längslenkern und einem die Längslenker verbindenden, im Querschnitt U-förmigen Querträger zum Stand der Technik. Eine solche Verbundlenkerachse hat sich in der Praxis bewährt. Sie weist jedoch komplexe räumlich verlaufende Schweißnähte zwischen den Stirnseiten des Querträgers und den Längslenkern auf. Durch diese Schweißnähte ergeben sich Schwierigkeiten in der Serienfertigung, wenn der Querträger, insbesondere durch Laserstrahlen, endseitig beschnitten wird. Weitere Schwierigkeiten entstehen beim Schweißen durch variierende Parameter und unbefriedigende Zugänglichkeit. Auch sind Probleme hinsichtlich der Dauerfestigkeit der Schweißverbindungen durch spannungskritische Verläufe nicht ausgeschlossen.

Aus der EP 0 681 932 A2 bzw. DE 44 16 725 A1 geht eine Kraftfahrzeughinterachse hervor, die aus zwei Längslenkern besteht, die durch einen Querträger verbunden sind. Endseitige Hohlstutzen des Querträgers übergreifen Konsolen an den Längslenkern formschlüssig und sind mit diesen über ihre Stirnflächen verschweißt. Der Querträger ist auf dem überwiegenden Teil seiner Länge V-förmig profiliert. Nachteilig an dieser Lösung ist, dass Gussteile mit einem Querlenkerprofil aus Stahl verschweißt werden müssen.

Durch die JP 6143953 A gehört ein Querlenker zum Stand der Technik, der aus zwei Schalen zusammengesetzt ist. Die oben liegende Schale übergreift die unten liegende Schale auf den Seitenflächen. Die freien Stirnflächen der Oberschale sind mit der angrenzenden Außenfläche der Unterschale verschweißt.

Die EP 0 739 763 A1 beschreibt ebenfalls einen Querlenker, der im Querschnitt U-förmige Schalen aufweist. Außenseitig übergreifen Randabschnitte der Oberschale die Unterschale. Freie Stirnflächen der Oberschale sind in diesem Bereich mit der Unterschale verschweißt.

Eine weitere Verbundlenkerachse mit zwischen Längslenkern sich erstreckenden Querträgern U-förmiger Profilierung ist durch die DE 196 49 076 A1 bekannt.

Der Erfindung liegt - ausgehend vom Stand der Technik - die Aufgabe zugrunde, eine Verbundlenkerachse mit zwei Längslenkern sowie mit einem die Längslenker verbindenden Querträger zu schaffen, welche hinsichtlich der einzelnen Teile leichter herstellbar und unter Vermeidung von spannungskritischen Verläufen problemloser hinsichtlich der Einzelteile schweißbar ist.

Diese Aufgabe wird nach der Erfindung mit den im Patentanspruch 1 angegebenen Merkmalen gelöst.

Ein wesentliches Merkmal der erfindungsgemäßen Verbundlenkerachse ist die Gestaltung der Übergangsbereiche von dem Querträger auf die Längslenker. Dazu weist der Querträger endseitig Hohlstutzen mit ovalen Querschnitten auf. Diese Hohlstutzen können zusammen mit dem restlichen Längenbereich des Querträgers in einem einmaligen Pressenzug mechanisch umgeformt sein. Als Ausgangsgegenstand wird ein Rohr eingesetzt.

Die Hohlstutzen übergreifen weitgehend formschlüssig im Querschnitt ovale Konsolen, die stirnseitig geschlossen und an die Längslenker angeformt sind. Dadurch, dass die Stirnseiten geschlossen sind, werden sehr steife Übergänge zum Querträger gewährleistet. Dies wirkt sich besonders vorteilhaft auf das Spur-Sturzverhalten unter Berücksichtigung einer gewichtsoptimierten Bauweise aus.

In diesem Zusammenhang ist es ferner von Vorteil, dass die Stirnflächen der Hohlstutzen in einer einfachen geraden Sägeoperation beschnitten werden können. Dies erlaubt jederzeit einen Längenausgleich in einer Schweißvorrichtung, wobei die schmalen Stirnflächen der Hohlstutzen mit den benachbarten Außenflächen der Konsolen durch Kehlnähte verschweißt werden.

Derartige überlappende Verbindungen stellen einfachste Anforderungen an die Schweißtechnik und sichern Schweißnähte, die in ihrem Verlauf spannungsunkritisch für hohe Dauerfestigkeit sind.

Eine besonders gute Fügbarkeit selbst komplex gestalteter Schalen der Längslenker wird besonders dadurch erreicht, dass auf den dem Querträger abgewandten Seiten nach unten weisende Randabschnitte der Oberschalen nach oben gerichtete Randabschnitte der Unterschalen übergreifen, während auf den dem Querträger zugewandten Seiten nach oben weisende Randabschnitte der Unterschalen nach unten gerichtete Randabschnitte der Oberschalen übergreifen. Die Oberschalen sind auf diese Weise um die Blechdicke der Schalen in Längsrichtung des Querträgers versetzt. Dadurch können die schmalen freien äußeren Stirnflächen der Randabschnitte der Unterschalen mit den benachbarten Außenflächen der Oberschalen und die schmalen freien äußeren Stirnflächen der Randabschnitte der Oberschalen mit den benachbarten Außenflächen der Randabschnitte der Unterschalen problemlos durch Kehlnähte verschweißt werden.

Nach Patentanspruch 2 sind Federteller als Bestandteile von Aufnahmemulden an den Oberschalen ausgebildet. Diese Federteller werden von bogenförmigen Randbereichen der Unterschalen unterfangen. Die schmalen Stirnflächen der Randbereiche werden dann mit den angrenzenden, nach unten gerichteten Flächen der Federteller durch Kehlnähte verschweißt.

Die Radträger werden bevorzugt als dreiteilige Unterbaugruppen gefertigt und entsprechend den Merkmalen des Patentanspruchs 3 mit den Oberschalen verschweißt.

Die Stoßdämpferhalter sowie die Anlenkaugen zur Verbindung der Verbundlenkerachse mit einer Karosserie werden gemäß Patentanspruch 4 sowohl mit den Unterschalen als auch mit den Oberschalen verschweißt.

Die Erfindung ist nachfolgend anhand eines in den Zeichnungen veranschaulichten Ausführungsbeispiels näher erläutert. Es zeigen:
- Figur 1: in schematischer perspektivischer Darstellung eine Verbundlenkerachse für einen Personenkraftwagen;
- Figur 2: eine Unteransicht der Verbundlenkerachse der Figur 1 in Richtung des Pfeils II gesehen;
- Figur 3: einen vertikalen Querschnitt durch die Darstellung der Figur 1 entlang der Linie III-III in Richtung der Pfeile IIIa gesehen;
- Figur 4: eine Stirnansicht auf die Verbundlenkerachse der Figur 1 in Richtung des Pfeils IV gesehen;
- Figur 5: in vergrößertem Maßstab einen Schnitt durch die Darstellung der Figur 1 entlang der Linie V-V in Richtung der Pfeile Va gesehen;
- Figur 6: ebenfalls in vergrößertem Maßstab einen Schnitt durch die Darstellung der Figur 1 entlang der Linie VI-VI in Richtung der Pfeile Vla gesehen und
- Figur 7: einen Schnitt durch die Darstellung der Figur 5 entlang der Linie VII-VII in Richtung der Pfeile Vlla gesehen.

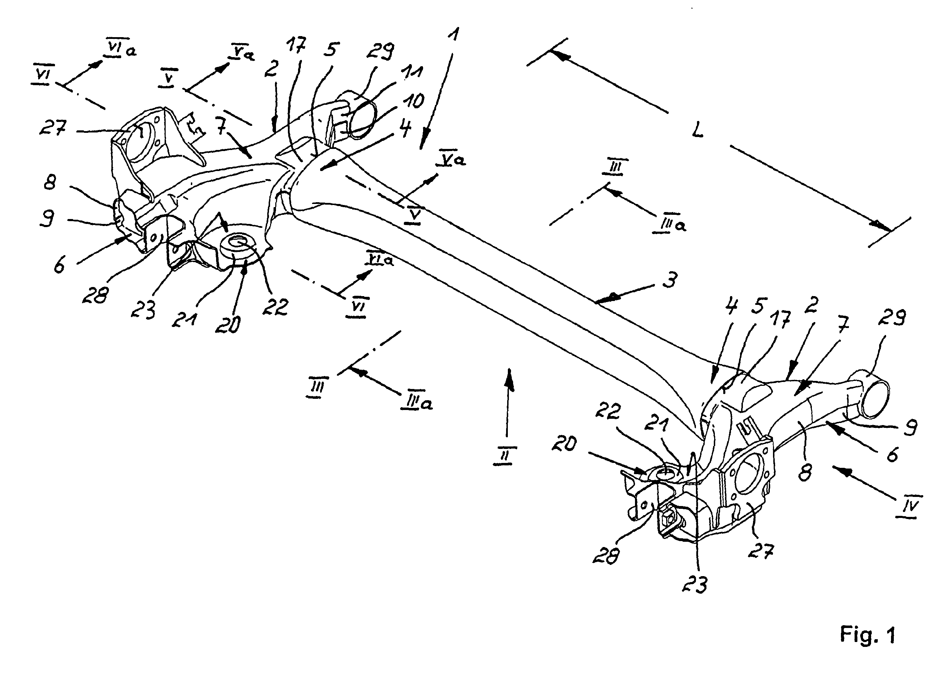

Mit 1 ist in den Figuren 1 bis 4 eine Verbundlenkerachse für einen Personenkraftwagen bezeichnet. Die Verbundlenkerachse 1 setzt sich aus zwei Längslenkern 2 und einem zwischen die Längslenker 2 eingegliederten Querträger 3 zusammen.

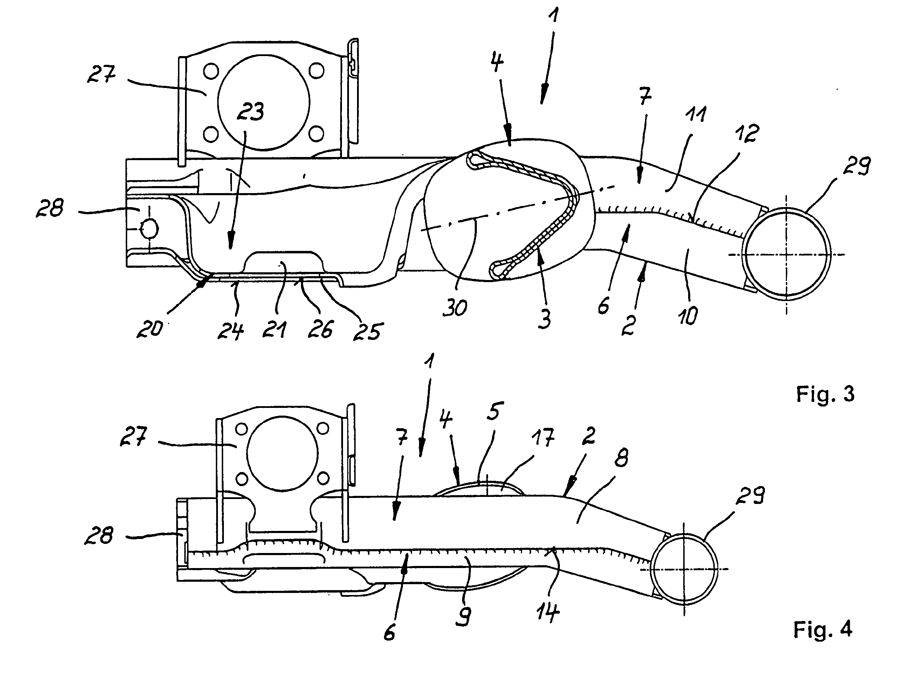

Der Querträger 3 ist auf dem überwiegenden Teil L seiner Länge U- bzw. V-förmig profiliert (Figuren 1 bis 3), wobei diese Profilierung durch spanloses Umformen eines Rohrs gebildet wird. In der U-förmig profilierten Teillänge L ist der Querträger 3 mithin doppellagig gestaltet (Figur 3).

Die Enden des Querträgers 3 sind als Hohlstutzen 4 mit ovalen Querschnitten ausgebildet (Figuren 1 bis 4). Die Übergänge von der U-förmigen Profilierung des Querträgers 3 auf die Hohlstutzen 4 sind vorsprungslos fließend.

Die schmalen Stirnflächen 5 der Hohlstutzen 4 sind durch Sägeoperationen mit geraden Schnittkanten ausgebildet (Figuren 1, 2, 5 und 7).

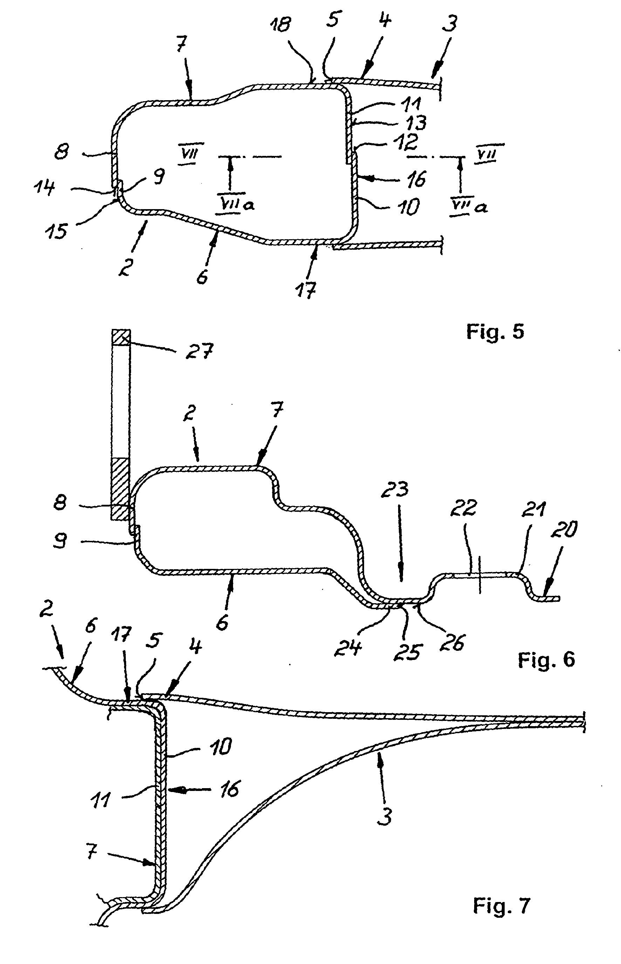

Die Längslenker 2 setzen sich in spiegelbildlicher Ausgestaltung zur vertikalen Mittelquerebene der Verbundlenkerachse 1 jeweils aus einer Unterschale 6 und einer Oberschale 7 zusammen (Figuren 1 bis 7), die durch einen einfachen Pressvorgang hergestellt werden können. Wie in diesem Zusammenhang insbesondere die Figuren 5 bis 7 erkennen lassen, übergreifen auf den dem Querträger 3 abgewandten Seiten der Längslenker 2 nach unten weisende Randabschnitte 8 der Oberschalen 7 nach oben gerichtete Randabschnitte 9 der Unterschalen 6, während auf den dem Querträger 3 zugewandten Seiten der Längslenker 2 nach oben weisende Randabschnitte 10 der Unterschalen 6 nach unten gerichtete Randabschnitte 11 der Oberschalen 7 übergreifen. Folglich können die schmalen freien äußeren Stirnflächen 12 der Randabschnitte 10 der Unterschalen 6 mit den angrenzenden Außenflächen 13 der Randabschnitte 11 der Oberschalen 7 bzw. die schmalen freien äußeren Stirnflächen 14 der Randabschnitte 8 der Oberschalen 7 mit den angrenzenden Außenflächen 15 der Randabschnitte 9 der Unterschalen 6 durch einfache Schweißkehlnähte verbunden werden.

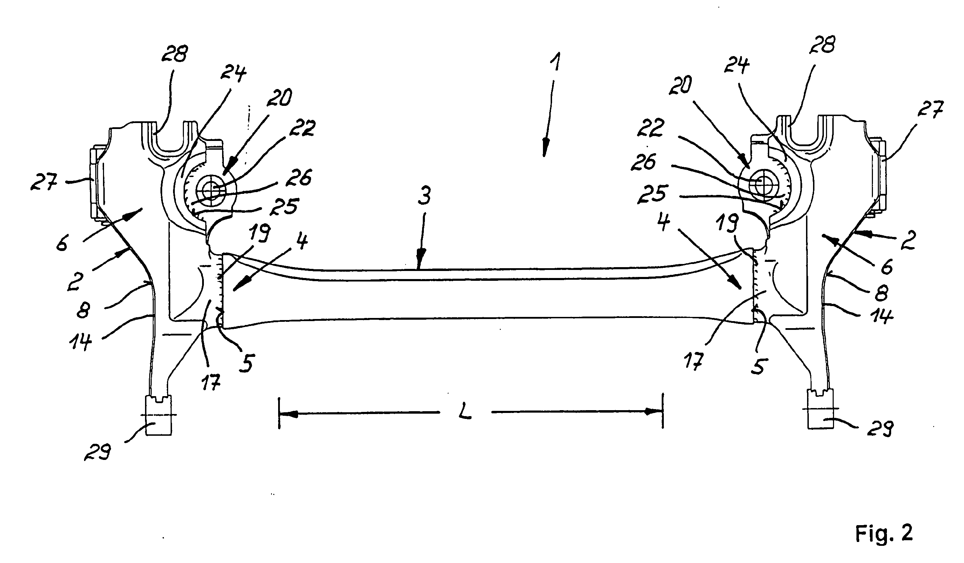

Aus den Figuren 1, 2, 4, 5 und 7 ist ferner erkennbar, dass an den Längslenkern 2 zum Querträger 3 vorstehende, an ihren Stirnseiten 16 geschlossene, im Querschnitt ovale, das heißt an den Querschnitt der Hohlstutzen 4 weitgehend angepasste Konsolen 17 angeformt sind. Diese Konsolen 17 werden von den Hohlstutzen 4 übergriffen, wobei die Stirnflächen 5 der Hohlstutzen 4 mit den angrenzenden Außenflächen 18 der Konsolen 17 durch einfache umlaufende Schweißkehlnähte 19 verbunden werden (Figuren 2 und 5).

Aus den Figuren 1 bis 3 und 6 erkennbare Federteller 20 mit zentralen kreisrunden Erhöhungen 21 und darin angeordneten Bohrungen 22 bilden Bestandteile von Aufnahmemulden 23, die an den Oberschalen 7 ausgebildet sind. Wie in diesem Zusammenhang insbesondere die Figuren 2, 3 und 6 erkennen lassen, werden die Federteller 20 von bogenförmigen Randbereichen 24 der Unterschalen 6 unterfangen. Die schmalen Stirnflächen 25 dieser Randbereiche 24 sind mit den nach unten gerichteten angrenzenden Flächen 26 der Federteller 20 durch Kehlnähte verschweißt.

Aus den Figuren 1 bis 4 und 6 erkennbare Radträger 27 sind als dreiteilige Unterbaugruppen mit den Oberschalen 7 verschweißt.

Ferner lassen die Figuren 1 bis 4 erkennen, dass Stoßdämpferhalter 28 und Anlenkaugen 29 zur Verbindung der Verbundlenkerachse 1 mit der Karosserie des Pkw's sowohl mit den Unterschalen 6 als auch mit den Oberschalen 7 verschweißt sind.

Insbesondere die Figur 3 zeigt schließlich noch, dass die Mittellängsebenen 30 des Querträgers 3 in dem jeweils geeigneten Winkel zu den Längslenkern 2 angeordnet werden kann. Entsprechend dem geforderten Winkel sind lediglich die Konsolen 17 an den Längslenker 2 anzuformen.

### Bezugszeichenaufstellung

- 1 -: Verbundlenkerachse
- 2 -: Längslenker
- 3 -: Querträger
- 4 -: Hohlstutzen
- 5 -: Stirnflächen v. 4
- 6 -: Unterschalen
- 7 -: Oberschalen
- 8 -: Randabschnitte v. 7
- 9 -: Randabschnitte v. 6
- 10 -: Randabschnitte v. 6
- 11 -: Randabschnitte v. 7
- 12 -: Stirnflächen v. 10
- 13-: Außenflächen v. 11
- 14 -: Stirnflächen v. 8
- 15 -: Außenflächen v. 9
- 16 -: Stirnseiten v. 17
- 17 -: Konsolen an 2
- 18 -: Außenflächen v. 17
- 19 -: Schweißkehlnähte
- 20 -: Federteller
- 21 -: Erhöhungen v. 20
- 22 -: Bohrungen in 21
- 23 -: Aufnahmemulden
- 24 -: Randbereiche v. 6
- 25 -: Stirnflächen v. 24
- 26 -: Flächen v. 20
- 27 -: Radträger
- 28 -: Stoßdämpferhalter
- 29 -: Anlenkaugen
- 30 -: Mittellängsebene v. 3

## Patentansprüche

1. Verbundlenkerachse mit zwei aus je einer Unterschale (6) und einer Oberschale (7) zusammengesetzten Längslenkern (2) sowie mit einem die Längslenker (2) verbindenden Querträger (3), welcher auf dem überwiegenden Teil (L) seiner Länge U- bzw. V-förmig profiliert ist und endseitig Hohlstutzen (4) mit ovalen Querschnitten aufweist, welche an den Längslenkern (2) angeformte, stirnseitig geschlossene, im Querschnitt ovale Konsolen (17) formschlüssig übergreifen und mit diesen über ihre Stirnflächen (5) verschweißt sind, wobei auf den dem Querträger (3) abgewandten Seiten nach unten weisende Randabschnitte (8) der Oberschalen (7) nach oben gerichtete Randabschnitte (9) der Unterschalen (6) übergreifen, während auf den dem Querträger (3) zugewandten Seiten nach oben weisende Randabschnitte (10) der Unterschalen (6) nach unten gerichtete Randabschnitte (11) der Oberschalen (7) übergreifen, und dass die freien äußeren Stirnflächen (12, 14) der Randabschnitte (10, 18) der Unterschalen (6) und Oberschalen (7) mit den angrenzenden Außenflächen (13, 15) der Randabschnitte (11, 9) der Oberschalen (7) bzw. der Unterschalen (6) verschweißt sind.

2. Verbundlenkerachse nach Patentanspruch 1, bei welcher Federteller (20) als Bestandteile von Aufnahmemulden (23) an den Oberschalen (7) ausgebildet und von bogenförmigen Randbereichen (24) der Unterschalen (6) unterfangen sowie mit diesen verschweißt sind.

3. Verbundlenkerachse nach Patentanspruch 1 oder 2, bei welcher Radträger (27) mit den Oberschalen (7) verschweißt sind.

4. Verbundlenkerachse nach einem der Patentansprüche 1 bis 3, bei welcher Stoßdämpferhalter (28) und Anlenkaugen (29) sowohl mit den Unterschalen (6) als auch mit den Oberschalen (7) verschweißt sind.

## Claims

1. Torsion beam axle comprising two longitudinal beams (2) each assembled from a lower shell (6) and an upper shell (7) and also having a crossbeam (3) which connects the longitudinal beams (2), which is profiled in a U or V shape over the predominant part (L) of its length and, at the end, has hollow supports (4) with oval cross sections, which engage with a form fit over brackets (17) integrally moulded on the longitudinal beams (2), are closed at the end and of oval cross section and are welded to the latter via their end faces (5), downwardly pointing edge sections (8) of the upper shells (7) on the sides facing away from the crossbeam (3) engaging over upwardly oriented edge sections (9) of the lower shells (6), while upwardly pointing edge sections (10) of the lower shells (6) on the sides facing the crossbeam (3) engage over downwardly oriented edge sections (11) of the upper shells (7), and in that the free outer end faces (12, 14) of the edge sections (10, 18) of the lower shells (6) and upper shells (7) are welded to the adjacent outer faces (13, 15) of the edge sections (11, 9) of the upper shells (7) and the lower shells (6) respectively.

2. Torsion beam axle according to Patent Claim 1, in which spring plates (20) are formed on the upper shells (7) as constituent parts of receiving hollows (23) and are underpinned by curved edge regions (24) of the lower shells (6) and welded to the latter.

3. Torsion beam axle according to Patent Claim 1 or 2, in which wheel carriers (27) are welded to the upper shells (7).

4. Torsion beam axle according to one of Patent Claims 1 to 3, in which shock absorber holders (28) and attachment eyes (29) are welded both to the lower shells (6) and to the upper shells (7).

## Revendications

1. Essieu à traverse déformable en torsion avec deux traverses longitudinales (2) composées chacune d'une coquille inférieure (6) et d'une coquille supérieure (7) ainsi qu'avec un support transversal (3) reliant les traverses longitudinales (2) qui est profilé en forme de U et/ou de V sur la plus grande partie (L) de sa longueur et comporte à ses extrémités des tubulures creuses (4) à sections transversales ovales qui recouvrent par forme des consoles à sections transversales ovales (17) moulées sur les traverses longitudinales (2), fermées sur leur face frontale, et sont soudées à elles via leurs surfaces frontales (5), des sections de bord dirigées vers le bas (8) des coquilles supérieures (7) recouvrant des sections de bord dirigées vers le haut (9) des coquilles inférieures (6) sur les faces détournées du support transversal (3), dans lequel sur les faces tournées vers le support transversal (3) des sections de bord dirigées vers le haut (10) des coquilles inférieures (6) recouvrent des sections de bord dirigées vers le bas (11) des coquilles supérieures (7) et les surfaces frontales libres extérieures (12, 14) des sections de bord (10, 18) des coquilles inférieures (6) et des coquilles supérieures (7) étant soudées aux surfaces extérieures adjacentes (13, 15) des sections de bord (11, 9) des coquilles supérieures (7) et/ou des coquilles inférieures (6).

2. Essieu à traverse déformable en torsion selon la revendication 1, sur lequel des cuvettes de ressorts (20) sont réalisées sur les coquilles supérieures (7) comme composants de creux de logement (23) et soutenues par des zones de bords (24) en forme d'arc des coquilles inférieures (6) ainsi que soudées à ces dernières.

3. Essieu à traverse déformable en torsion selon la revendication 1 ou 2, sur lequel des supports de roues (27) sont soudés aux coquilles supérieures (7).

4. Essieu à traverse déformable en torsion selon l'une quelconque des revendications 1 à 3, sur lequel des supports d'amortisseurs (28) et des oeillets d'articulation (29) sont soudés tant aux coquilles inférieures (6) qu'aux coquilles supérieures (7).
